# EUROPÄISCHE PATENTSCHRIFT

(11) **EP 1 525 786 B1**
(45) Veröffentlichungstag und Bekanntmachung des Hinweises auf die Patenterteilung: **28.02.2007**
(21) Anmeldenummer: 04025156.3
(22) Anmeldetag: 22.10.2004
(51) Int. Cl.: A01D 78/10

(54) **Kreiselschwader**
Rotary swather
Andaineuse rotative

(30) Priorität: 24.10.2003 DE 10349973
(43) Veröffentlichungstag der Anmeldung: 27.04.2005
(73) Patentinhaber: CLAAS Saulgau GmbH, 88348 Bad Saulgau (DE)
(72) Erfinder: Boll, Ulrich, 88348 Bad Saulgau (DE); Geng, Manfred, 88348 Bad Saulgau (DE); Huber, Johann, 83373 Taching am See (DE); Loebe, Stefan, 88348 Bad Saulgau (DE)
(74) Vertreter: Eisele, Otten, Roth & Dobler

(56) Entgegenhaltungen:
- EP-A1- 0 819 372
- EP-A1- 1 493 321
- DE-A1- 10 258 661

## Beschreibung

Die Erfindung bezieht sich auf einen 6-Kreiselschwader nach dem Oberbegriff des Anspruchs 1.

### Stand der Technik

In der noch nicht veröffentlichten DE102 58 661.6 ist ein Kreiselschwader aus wenigstens drei Staffelreihen bildenden Schwadkreiseln beschrieben, wobei zwischen der vorderen und der hinteren Staffelreihe wenigstens ein Fahrwerk angeordnet ist, und dass die Schwadkreisel dabei in V-förmiger Anordnung gestaffelt mindestens sechs Schwadkreisel umfassen.

Die weitere Ausgestaltung des Kreiselschwaders ist derart beschrieben, dass eine Staffelreihe aus wenigstens zwei Schwadkreiseln besteht und dass die Staffelung der Schwadkreisel so ausgebildet ist, dass ein in Fahrtrichtung V-förmig offenes Zuordnungsschema gebildet wird und dass wenigstens die Schwadkreisel der ersten Staffelreihe längenveränderbare Ausleger aufweisen, die mit dem Fahrgestell in Wirkverbindung stehen.

Ein Kreiselschwader gemäß der EP-A1-1 493 321 sieht vor, die V-förmige Staffelung der Schwadkreisel, wie dieses zur Erzeugung einer mittigen Schwadablage (Fachterminus ist Mittelschwader) erforderlich ist, dadurch zu erzeugen, dass der hintersten Staffelreihe wenigstens zwei weitere Staffelreihen vorgelagert sind, deren Schwadkreisel beidseitig des Fahrgestells an je einem verschwenkbaren Längszusatzträger angelenkt sind.

Hier setzt die nachfolgende Erfindung an um weitere Verbesserungen an vergleichbaren Kreiselschwadern dieser Art zu schaffen.

### Aufgabenstellung

Die Aufgabe dieser Erfindung ist es, einen Kreiselschwader als Mittelschwader mit großer Arbeitsbreite in einer kostengünstigen Bauart und unter Berücksichtigung der Minimierung der Transportabmessungen und der Variabilität in Bezug auf die Arbeits- und Schwadbreite des abgelegten Schwads vorzuschlagen. Ein weiterer und wesentlicher Gesichtspunkt ist dabei auch die Erhöhung der Verkehrssicherheit durch gute Manövriereigenschaften.

### Lösung der Aufgabe

Gelöst wird die Aufgabe der Erfindung mit den kennzeichnenden Merkmalen des unabhängigen Anspruchs 1. Weitere vorteilhafte Ausgestaltungen der Erfindung sind den abhängigen Ansprüchen, der Beschreibung und den Figurendarstellungen zu entnehmen.

Gemäß der Erfindung werden die hinteren Schwadkreisel der hintersten Staffelreihe an längenveränderlichen Auslegern an das Fahrgestell derart angelenkt, dass auch diese Ausleger in ihrer Längserstreckung eine V-förmige Anordnung in ihrer Längserstreckung zueinander einnehmen. Dabei divergiert die Längserstreckung der Ausleger derart, dass diese Anordnung V-förmig entgegen der Fahrtrichtung offen ist. Auch in diesem Fall verlaufen die Gelenkachsen der Klappgelenke der Ausleger etwa in Fahrtrichtung bzw. etwa parallel zur Hauptmittelebene des Kreiselschwaders, so, dass die Längenveränderung der Ausleger genutzt werden kann, einerseits die Ablagebreite des abgelegten Schwads zu variieren, und andererseits ebenfalls die Transporthöhe des Kreiselschwaders reduziert werden kann, bzw. auch die Transportlänge des Kreiselschwaders dadurch reduziert werden kann, dass die Schwadkreisel im hochgeklappten Zustand eine Verrückung in Fahrtrichtung erfahren, welches zu einer Verkürzung der Transportlänge beiträgt. Auch bei dieser Ausgestaltung und Anordnung der längenveränderbaren Ausleger kommt der Vorteil zum tragen, dass im Falle der Verrückung der Schwadkreisel in ihrer Arbeitsstellung zur Vergrößerung oder Verkleinerung der Schwadbreite die Kurvenbahnen der Schwadkreisel zur Steuerung des Aushubs der Rechzinken nicht nachjustiert werden müssen.

Um die Bodenanpassung hinsichtlich der Höhenbewegungen der Schwadkreisel optimal zu gestalten sind die Längszusatzträger am hinteren Ende gleichzeitig um eine waagerechte Schwenkachse in einem Schwenkgelenk mit dem deichselbildenden Längsträger verbunden. In besonders vorteilhafter Weise kann das Gelenk zur Anbindung des Längszusatzträgers an den deichselbildenden Längsträger als kardanisches Gelenk ausgebildet sein, dessen eine Gelenkachse etwa vertikal und dessen andere Gelenkachse etwa horizontal verläuft.

Erfindungsgemäß sind die Längszusatzträger um vertikale Schwenkachsen, die in Schwenklagern am hinteren Ende des deichselbildenden Längsträgers des Fahrgestells angelenkt sind, horizontal verschwenkbar.

Dieses hat zur Folge, dass die Längszusatzträger in ihrer Betriebs- bzw. Arbeitsstellung eine in Fahrtrichtung V-förmige offene Anordnung zueinander bilden, wohingegen diese zur Verbringung der Schwadkreisel in die Transportstellung wieder zurück geschwenkt, d.h. wieder an das Fahrgestell angeklappt werden. Diese, an das Fahrgestell herangeklappte Position der Längszusatzträger ist eine Zwischenstellung des Kreiselschwaders zur Herbeiführung der endgültigen Transportstellung. Aus dieser zurückgeklappten Zwischenstellung heraus werden die Schwadkreisel, die in Klappgelenken an den Längszusatzträger angelenkt sind, in ihre endgültige Transportstellung hochgeklappt.

Die Anlenkung der Schwadkreisel an diese Längszusatzträger erfolgt dabei mit Auslegern, deren Längserstreckung sich im wesentlichen quer zur Fahrtrichtung erstreckt. In einer besonders vorteilhaften Ausgestaltung sind die Ausleger längenveränderbar, beispielsweise teleskopierbar. Dieses ermöglicht eine Querverrückung der Schwadkreisel relativ zum Fahrgestell, welches einer Veränderung der Arbeitsbreite des Schwaders gleich kommt. In einer besonders vorteilhaften Ausgestaltung der Erfindung verläuft die Längserstreckung der Ausleger in deren heruntergeklappten Arbeitstellung etwa lotrecht zur Fahrtrichtung bzw. Hauptlängsmittelebne des Kreiselschwaders, welches den Vorteil in Verbindung mit den längenveränderbaren Auslegern bietet, dass trotz Arbeitsbreiten-Verstellung keine Nachregulierung der Ausrichtung der Kurvenbahn zur Aushubsteuerung der Zinkenarme erforderlich ist.

In einer weiteren Vorteilhaften Ausgestaltung der Erfindung verlaufen die Gelenkachsen der Klappgelenke der Ausleger etwa parallel zur Längserstreckung der Längszusatzträger, in dessen Folge diese Gelenkachsen dann ebenfalls im angeklappten Zustand der Längszusatzträger etwa parallel zur Fahrtrichtung bzw. zur Hauptlängsmittelebene verlaufen. Dieses hat zur Folge, dass die Hauptachse der Längserstreckung der Ausleger und die Gelenkachse einen stumpfen Winkel zueinander einnehmen, und wobei dann in Folge des Absenkens der Schwadkreisel aufgrund der Längenveränderbarkeit der Ausleger die Schwadkreisel zum einen eine Verrückung in der Höhenlage und zum anderen eine Verrückung in der Lage entgegen der Fahrtrichtung erfahren. Die Verrückung der Schwadkreisel in deren Höhenlage ist gleichzusetzen mit einer Reduzierung der Transporthöhe, und die Verrückung entgegen der Fahrtrichtung ist gleichzusetzen mit einer Verkürzung der Transportlänge des Kreiselschwaders. Letzteres ermöglicht eine Verkürzung der Zugdeichsel und damit einen näheres Heranrücken des Traktors an den Kreiselschwader 1.

Der Kreiselschwader kann selbstverständlich mit einem lenkbaren Fahrwerk ausgestattet sein. Ebenfalls kann ein Kreiselschwader nach der Erfindung auch als selbstfahrender Schwader ausgebildet sein, der beispielsweise mit einem einen Triebkopf ausgestattet ist, und der mit lenkbare Vorder- und/oder Hinterachsen ausgestattet ist.

Nähere Einzelheiten der Erfindung sind den nachfolgenden Figurendarstellungen und deren Beschreibungen zu entnehmen.

### Ausführungsbeispiel

Es zeigen:
- Fig. 1: zeigt ein Ausführungsbeispiel der Erfindung dargestellt am Beispiel eines gezogenen Kreiselschwaders in einer Seitenansicht in Arbeitsstellung
- Fig. 2: zeigt ein Ausführungsbeispiel der Erfindung dargestellt am Beispiel eines gezogenen Kreiselschwaders in einer Draufsicht in Arbeitsstellung
- Fig.3: zeigt den Kreiselschwader gemäß Fig.1 und Fig. 2 in einer perspektivischen Ansicht im verklappten Zustand in einer Transportstellung
- Fig. 4: zeigt den Kreiselschwader gemäß Fig.3 in einer Seitenansicht in Transportstellung.
- Fig. 5: zeigt einen Kreiselschwader gemäß Fig.4 in einer Draufsicht in Transportstellung.
- Fig. 6: zeigt einen Kreiselschwader gemäß Fig. 1 in vereinfachter Darstellung in einer Draufsicht in Arbeitsstellung.
- Fig. 7: zeigt einen Kreiselschwader gemäß Fig. 6 in vereinfachter Darstellung in einer Draufsicht in Arbeitsstellung mit einer reduzierten Arbeitsbreite.
- Fig. 8: zeigt einen Kreiselschwader in einer Zwischenstellung zur Verklappung der Schwadkreisel in die Transportstellung.

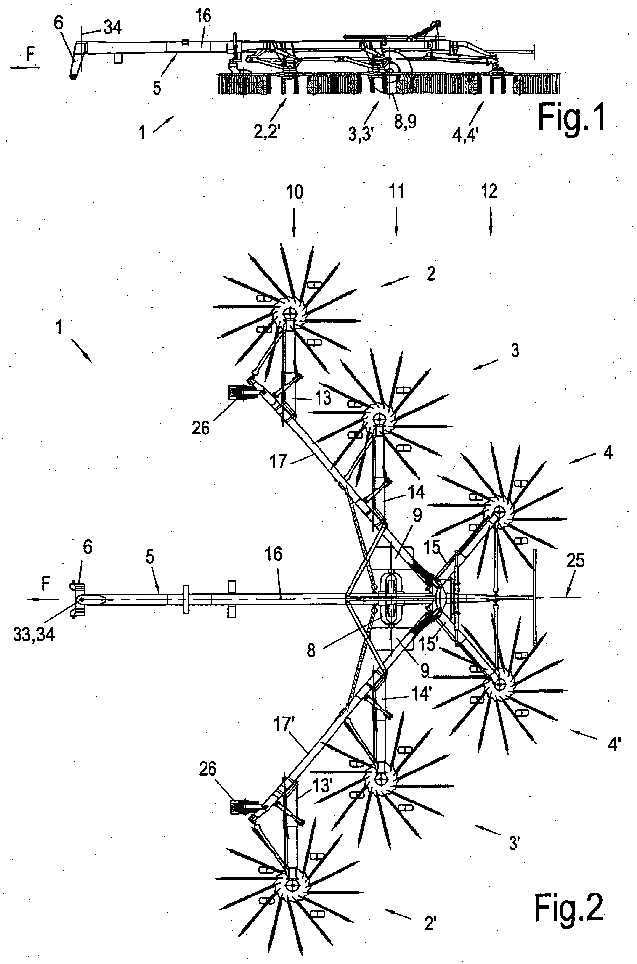

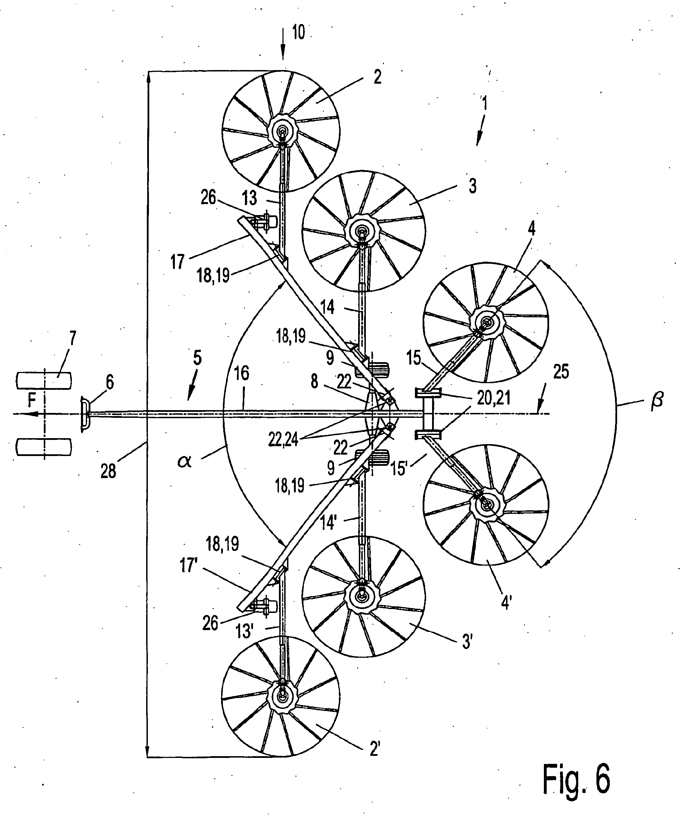

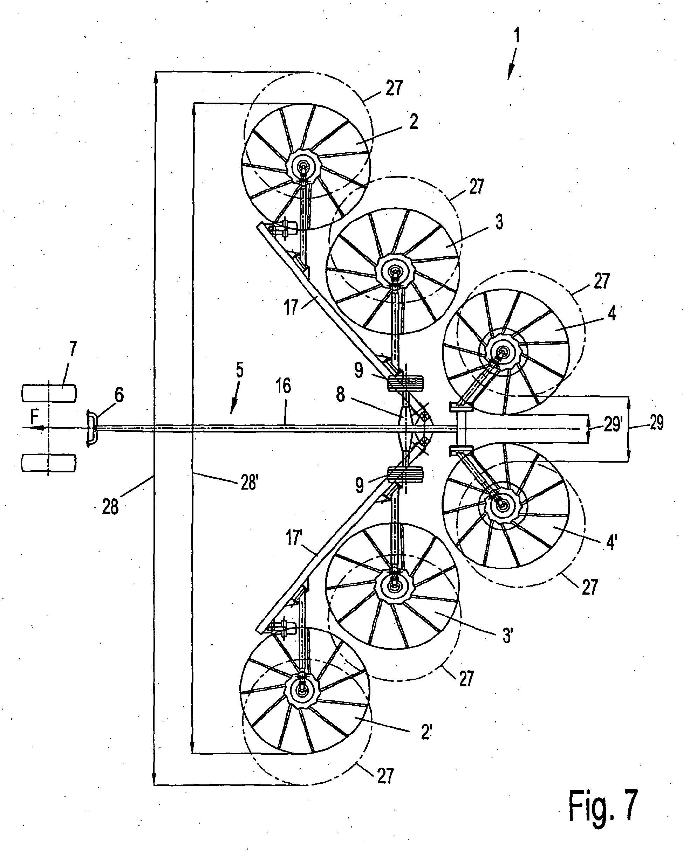

Fig. 1 und Fig. 2 zeigen ein Ausführungsbeispiel der Erfindung dargestellt am Beispiel eines gezogenen Kreiselschwaders 1 in einer Seitenansicht und in einer Draufsicht in Arbeitsstellung, ausgeführt als Mittelschwader. Analog zeigen die Fig. 6 und die Fig. 7 den Kreiselschwader in vereinfachter Darstellung ebenfalls in einer Draufsicht in Arbeitsstellung.

Insgesamt verfügt der Kreiselschwader 1 über sechs Schwadkreisel 2,2',3,3',4,4', die in drei Staffelreihen 10,11,12 V-förmig zu einander angeordnet sind. Die Arbeitsrichtung ist durch die Fahrtrichtung F angedeutet. Dabei kann der Kreiselschwader 1 mittels einer Kupplungseinrichtung 6 an einen Traktor 7 angehängt werden. An die Kupplungseinrichtung 6 angeschlossen ist der deichselbildende Längsträger 16 als Teil des Fahrgestells 5, wobei der deichselbildende Längsträger 16 mittels eines Zuggelenks 33, um die Hochachse 34 verschwenkbar ist, welches dem Kreiselschwader die Nachlaufeigenschaften eines gezogenen landwirtschaftlichen Gerätes vermittelt. Abgestützt wird der deichselbildende Längsholm im hinteren Bereich auf ein Fahrwerk 8 mit den Laufrädern 9.

Jeder der Schwadkreisel 2,2',3,3',4,4' ist mittels eines Auslegers 13,13',14,14',15,15' mit dem Fahrgestell 5 gelenkig in Gelenkverbindungen 18,20, ausgebildet als Klappgelenke mit den Gelenkachsen 19,21, verbunden. Dabei sind die Schwadkreisel 2,2',3,3' an Längszusatzträgern 17,17' indirekt mit dem deichselbildenden Längsträger 16 verbunden. Die deichselbildenden Längszusatzträger 17,17' sind im hinteren Bereich des deichselbildenden Längsträgers 16 in Gelenkverbindungen, ausgebildet als Klappgelenke 24 mit den Hochachsen 22, mit diesen verbunden. Die Schwadkreisel 2,2',3,3' und deren in Arbeitsstellung aufgeklappte Längszusatzträger 17,17' sind symmetrisch zur Hauptlängsmittelebene 25 angeordnet. Im vorderen Bereich der Längszusatzträger 17,17' werden diese jeweils durch ein Stütz- und Nachlaufrad 26 abgestützt. Damit die Längszusatzträger sich den Unebenheiten bzw. dem Bodenrelief des zu überfahrenden Geländes anpassen können, sind diese mittels eines Horizontalgelenks 23 entseitig an dem deichselbildenden Längsträger 16 angelenkt. Das Horizontalgelenk 23 und das Klappgelenk 24 kann auch als kardanisches Gelenk mit sich schneidenden Gelenkachsen ausgebildet sein. Dabei sind die Längszusatzträger derart aufgeklappt, dass sie den Öffnungswinkel α zueinander einnehmen.

Im hinteren Bereich des deichselbildenden Längsträgers 16 sind die Ausleger 15,15' der Schwadkreisel 4,4' gelenkig in den Klappgelenken 20 mit deren Gelenkachse 21 derart mit diesem verbunden, dass die Ausleger 15,15' in der Arbeitsstellung den Öffnungswinkel β zueinander einnehmen.

Die Ausleger 13,13',14,14',15,15' sind längenveränderbar ausgebildet derart, dass diese eine Verlagerung der an sie angeschlossenen Rechkreisel in Richtung deren Längserstreckung ermöglichen. Erfindungsgemäß ist die Ausrichtung der Ausleger 13,13',14,14' so gewählt, dass die Längserstreckung dieser Ausleger 13,13',14,14' überwiegend quer zur Fahrtrichtung F bzw. etwa lotrecht zur Längsmittelebene 25 verläuft. Die Ausrichtung der Längserstreckung der hinteren Ausleger 15,15' hingegen ist so gewählt, dass diese schräg zur Fahrtrichtung F unter dem Winkel ½ β gegenüber der Längsmittelebene 25 verlaufen.

In Fig. 7 ist die Auswirkung der so möglichen Verlagerung der Rechkreisel dargestellt, in dem die Konturenkreise 27 die Situation der maximalen Arbeitsbreite 28 wiedergeben, wobei in der Darstellung durch die Verlagerung der Rechkreisel in Richtung der Hauptlängsmittelebenen 25 die minimale Arbeitsbreite 28' dargestellt ist. Da es sich hierbei um eine kontinuierliche Verschiebung im Sinne der Verlagerung handelt kann jede Arbeitsbreite 28,28' in den Grenzen zwischen Maxima und Minima eingestellt werden. Das Maximum der Arbeitsbreite 28 bzw. das Minimum der Arbeitsbreite 28' ist definiert durch den Betrag des maximalen Verschiebeweges der äußeren Schwadkreisel 2,2', der gleichzeitig durch den maximalen Verschiebeweg der Ausleger 13,13' definiert ist.

Die Schwadbreite 29,29' kann ebenfalls, bedingt durch die Verschiebung der Schwadkreisel 4,4', kontinuierlich verstellt bzw. variiert werden, wobei der Verschiebeweg der Schwadkreisel 4,4' bzw. deren Verrückung ebenfalls durch die Längenveränderung der Ausleger 15,15' herbeigeführt wird.

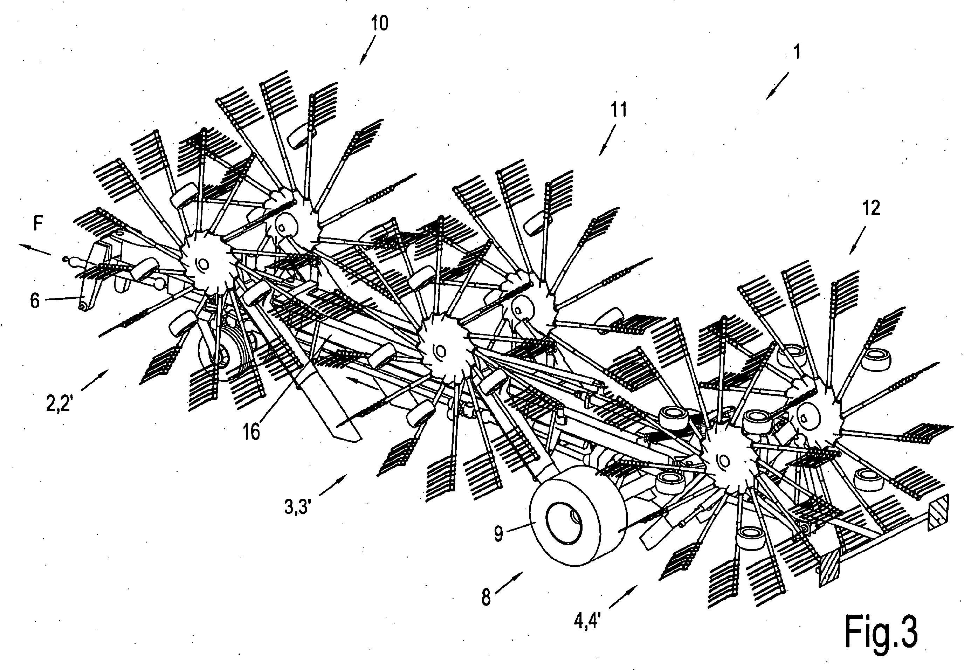

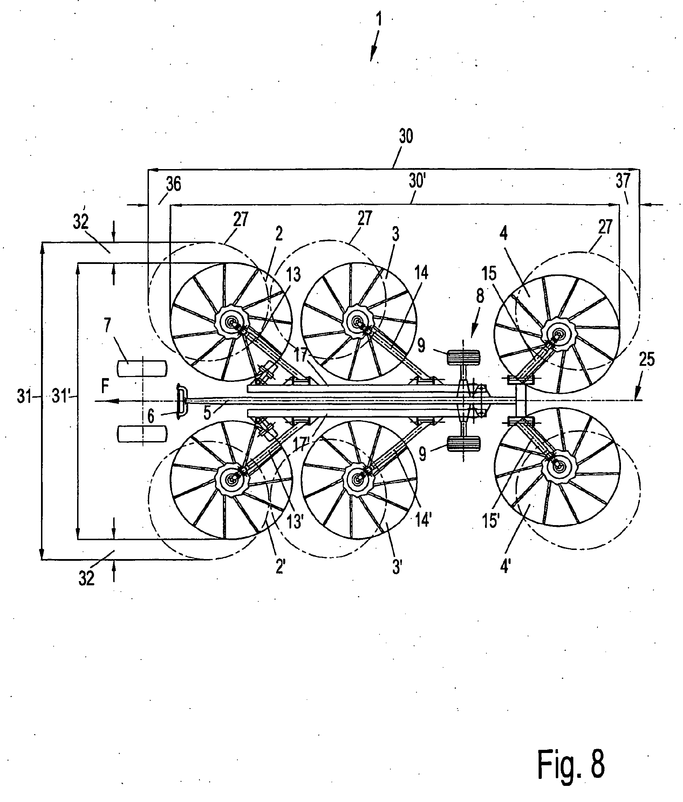

Fig. 8 zeigt den Kreiselschwader 1 in einer Zwischenstellung in Vorbereitung zur Verklappung der Schwadkreisel 2,2',3,3',4,4' in die Transportstellung, wie in Fig. 3 dargestellt. Wie in Fig. 8 dargestellt sind die Längszusatzträger 17,17' nunmehr entgegen der Arbeitsstellung angeklappt und nehmen eine Ausrichtung etwa parallel zur Fahrtrichtung F bzw. der Hauptlängsmittelebene 25 ein. Dadurch bedingt, dass die längenveränderbaren Ausleger 13,13',14,14',15,15' auf ihre - wie dargestellt - minimale Länge eingefahren sind, nehmen die Schwadkreisel 2,2',3,3',4,4' gegenüber der Lage, die bei voll ausgefahrenen Auslegern 13,13',14,14' eingenommen wird, eine die äußere Breite 31 reduzierende Lage ein, welche durch die reduzierte äußere Breite 31' gekennzeichnet ist.

Dieses verdeutlichen die Konturkreise 27, welche die äußere Breite 31 bei voll ausgefahrenen Auslegern 13,13',14,14' kennzeichnen. Nach dem Hochklappen der Schwadkreisel um ihre Gelenkachsen 19 bzw. 21 reduziert sich die Transporthöhe um den Betrag der Höhendifferenz 32. Gleichzeitig erfahren die Schwadkreisel 2,2',3,3' eine Verschiebung um die Längendifferenz 36 entgegen der Fahrtrichtung F, welches es ermöglicht, dass der deichselbildende Längsträger 27 entsprechend kürzer gestaltet sein kann, als dieses ohne die Verschiebung zur Erzeugung der Längendifferenz 36 der Fall sein würde. Infolge dessen kann der Traktor 7 näher an das Fahrgestell 8 heranrücken, welches die Gespannlänge entsprechend kürzer werden lässt.

Analog ergibt sich eine weiter Längendifferenz 37 nach dem gleichen Schema der Verschiebung der Schwadkreisel 4,4' durch das Einfahren der längenveränderbaren Ausleger 15,15. Nunmehr jedoch stellt sich eine Längs- und Querverrückung der Schwadkreisel 4,4' ein, und zwar eine Längsverrückung in Fahrtrichtung F und eine Querverrückung in Richtung der Hauptlängsmittelebene.

Die Längsverrückung in Fahrtrichtung F liefert ebenfalls einen Beitrag zur Verkürzung der Transportlänge 30,30' des Kreiselschwaders 1 in dessen Transportstellung, so dass auch dieses einen Betrag zur Verkürzung der Gespannlänge aus Traktor und angehängtem Kreiselschwader darstellt. Dadurch bedingt verkürzt sich die Transportlänge 30 des Kreiselschwaders 1 um die Summe der Beträge der Längendifferenzen 36,37 auf die nunmehr reduzierte Transportlänge 30'.

In der Fig. 3 Ist der Kreiselschwader 1 in einer perspektivischen Ansicht im verklappten Zustand in seiner endgültigen Transportstellung, d.h. höhen- und längenreduziert dargestellt.

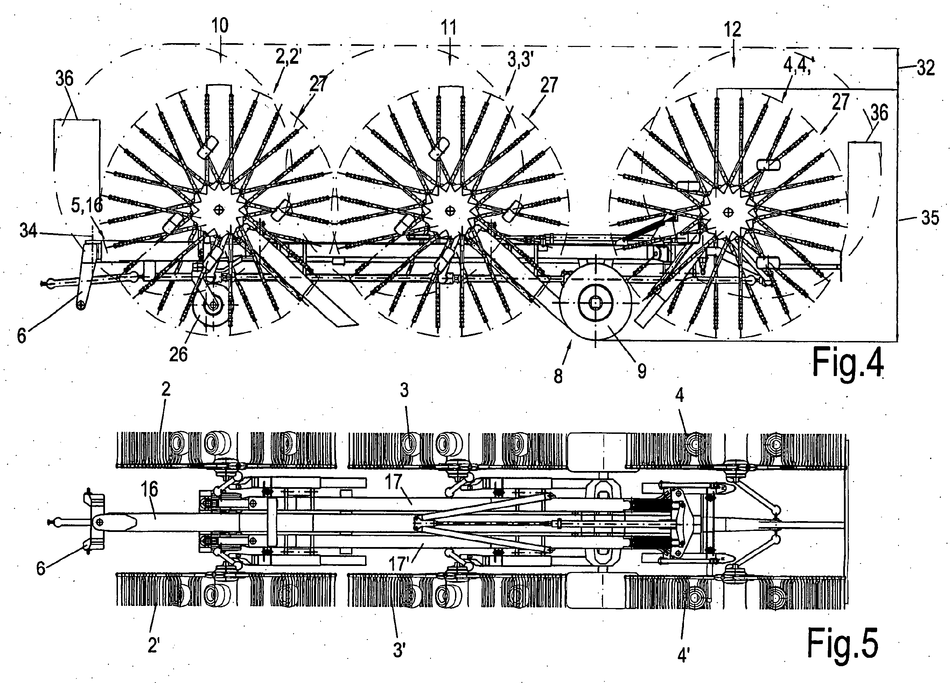

In Fig. 4 ist der Kreiselschwader 1 gemäß Fig.3 in einer Seitenansicht und in Fig. 5 in einer Draufsicht in seiner Transportstellung dargestellt.

Die erfinderischen Merkmale, wie zuvor dargestellt, liefern somit einen Beitrag zur Verkürzung der Transportlänge und zur Reduzierung der Transporthöhe zugleich, welches einen Betrag zur Erhöhung der Verkehrssicherheit insgesamt liefert. Selbst bei großen Arbeitsbreiten eines Kreiselschwaders 1 nach der Erfindung, wie beispielsweise etwa 22 Meter, liegen dieses im verklappten Transportzustand noch in den Abmessungen des zulässigen Straßentransportprofils, wobei eine Abnahme der Zinkenarme dazu nicht einmal erforderlich wäre.

### Bezugszeichenliste

- 1: Kreiselschwader
- 2,2': Schwadkreisel
- 3,3': Schwadkreisel
- 4,4': Schwadkreisel
- 5: Fahrgestell
- 6: Kupplungseinrichtung
- 7: Traktor
- 8: Fahrwerk
- 9: Laufräder
- 10: erste Staffelreihe
- 11: zweite Staffelreihe
- 12: dritte Staffelreihe
- 13,13': vorderer Ausleger
- 14,14': mittlerer Ausleger
- 15,15': hinterer Ausleger
- 16: deichselbildender Längsträger
- 17,17': Längszusatzträger
- 18: Klappgelenk
- 19: Gelenkachse
- 20: Klappgelenk
- 21: Gelenkachse
- 22: Hochachsen
- 23: Horizontalgelenk
- 24: Klappgelenk
- 25: Hauptlängsmittelebene
- 26: Stütz- und Nachlaufrad
- 27: Konturkreis
- 28,28': Arbeitsbreite
- 29,29': Schwadbreite
- 30,30': Transportlänge
- 31,31': äußere Breite
- 32: Höhendifferenz
- 33: Zuggelenk
- 34: Hochachse
- 35: Transporthöhe
- 36: Längedifferenz
- 37: Längedifferenz

- F: Fahrtrichtung
- α: Öffnungswinkel
- β: Öffnungswinkel

## Patentansprüche

1. Kreiselschwader (1) mit um etwa vertikale Achsen umlaufend angetriebene in Fahrtrichtung (F) hintereinander gestaffelt angeordnete am Boden durch Laufräder abgestützte Schwadkreisel zum Zusammenrechen von am Boden liegendem Erntegut, dessen Schwadkreisel durch Hochschwenken aus der Arbeitsstellung in eine Transportstellung und umgekehrt verklappbar sind, wobei die Schwadkreisel an Auslegern in Klappgelenken mit einem Fahrgestell verbunden sind, und wobei zumindest zwei benachbarte Schwadkreisel in ihrer Arbeitsstellung eine Staffelreihe bilden und wobei wenigstens zwei Staffelreihen eine V-förmige Anordnung bilden, und wobei der letzten Staffelreihe (12) zumindest zwei weitere Staffelreihen (10,11) vorgelagert sind, und die Schwadkreisel (2,2',3,3') der vorgelagerten Staffelreihen (10,11) an um im hinteren Bereich des Fahrgestells (5) um Hochachsen (22,22') verschwenkbaren Längszusatzträgern (17,17') angelenkt sind **dadurch gekennzeichnet, dass** die Schwadkreisel (4,4') der letzten Staffelreihe (12) an längenveränderbaren Auslegern (15,15') angelenkt sind, und die Längserstreckung der Ausleger (15,15') in deren Arbeitsstellung einen entgegen der Fahrtrichtung V-förmig sich öffnenden und divergierenden Verlauf mit einem Öffnungswinkel (β) aufweisen.

2. Kreiselschwader (1) nach Anspruch 1, **dadurch gekennzeichnet, dass** die Längszusatzträger (17,17') in deren Arbeitsstellung einen in Fahrtrichtung (F) V-förmig sich öffnenden und divergierenden Verlauf mit einem Öffnungswinkel (α) aufweisen.

3. Kreiselschwader (1) nach Anspruch 2, **dadurch gekennzeichnet, dass** der Öffnungswinkel (α) zwischen den Längszusatzträgern (17,17') in der Arbeitsstellung etwa zwischen 115° und 75°, vorzugsweise bei etwa 100° liegt.

4. Kreiselschwader (1) nach Anspruch 2, **dadurch gekennzeichnet, dass** die Schwadkreisel (2,2',3,3') der vorgelagerten Staffelreihen (10, 11) mittels nach außen weisenden Auslegern (13,13',14,14') in Klappgelenken (18) an den Längszusatzträger (17,17') angelenkt sind.

5. Kreiselschwader (1) nach Anspruch 4, **dadurch gekennzeichnet, dass** wenigstens einer der Ausleger (13,13',14,14') längenveränderbar ist.

6. Kreiselschwader (1) nach Anspruch 4, **dadurch gekennzeichnet, dass** die Ausleger (13,13',14,14') überwiegend quer zur Längsmittelebene (25) verlaufen.

7. Kreiselschwader (1) nach Anspruch 4, **dadurch gekennzeichnet, dass** die Ausleger (13,13',14,14') etwa lotrecht zur Längsmittelebene verlaufen.

8. Kreiselschwader (1) nach Anspruch 4, **dadurch gekennzeichnet, dass** die Gelenkachsen (19) der Klappgelenke (18) in der Transportstellung des Kreiselschwaders (1) etwa in Fahrtrichtung (F) bzw. etwa parallel zur Hauptlängsmittelebene (25)verlaufen.

9. Kreiselschwader (1) nach Anspruch 4, **dadurch gekennzeichnet, dass** die Längenveränderbarkeit wenigstens der vorderen Ausleger (13,13') zur Variation der Arbeitsbreite (28,28') nutzbar ist.

10. Kreiselschwader (1) nach Anspruch 4, **dadurch gekennzeichnet, dass** die Längenveränderbarkeit der Ausleger (13,13',14,14') zur Minderung der Transportlänge (30) nutzbar ist.

11. Kreiselschwader (1) nach Anspruch 4, **dadurch gekennzeichnet, dass** die Längenveränderbarkeit der Ausleger (13, 13', 14, 14') zur Minderung der Transporthöhe (35) nutzbar ist.

12. Kreiselschwader (1) nach Anspruch 1, **dadurch gekennzeichnet, dass** der Öffnungswinkel (β) etwa zwischen 95° und 65°, vorzugsweise bei etwa 80° liegt.

13. Kreiselschwader (1) nach Anspruch 1, **dadurch gekennzeichnet, dass** die Gelenkachsen (21) der Klappgelenke (20) etwa in Fahrtrichtung (F) bzw. etwa parallel zur Hauptlängsmittelebene (25) verlaufen.

14. Kreiselschwader (1) nach Anspruch 1, **dadurch gekennzeichnet, dass** die Längenveränderbarkeit der Ausleger (15,15') zur Variation der Schwadbreite (29,29') nutzbar ist.

15. Kreiselschwader (1) nach Anspruch 1, **dadurch gekennzeichnet, dass** die Längenveränderbarkeit der Ausleger (15,15') zur Minderung der Transportlänge (30) nutzbar ist.

16. Kreiselschwader (1) nach Anspruch 1, **dadurch gekennzeichnet, dass** die Längenveränderbarkeit der Ausleger (15,15') zur Minderung der Transporthöhe (35) nutzbar ist.

17. Kreiselschwader (1) nach Anspruch 1 und Anspruch 12 und weiteren der vorhergehenden Ansprüche, **dadurch gekennzeichnet, dass** die Lageveränderung der Schwadkreisel (2,2',3,3',4,4') relativ zur Hauptlängsmittelebene (25) durch eine Verschiebung der Schwadkreisel (2,2',3,3',4,4') längs des Weges der Längserstreckung der Ausleger (13,13',14,14',15,15') herbeigeführt werden kann.

18. Kreiselschwader (1) nach Anspruch 1 und weiteren der vorhergehenden Ansprüche, **dadurch gekennzeichnet, dass** der Kreiselschwader (1) als ein an einen Traktor (1) anhängbarer Schwader ausgebildet ist.

19. Kreiselschwader (1) nach Anspruch 1 und weiteren der vorhergehenden Ansprüche, **dadurch gekennzeichnet, dass** der Kreiselschwader (1) als selbstfahrender Schwader ausgebildet ist.

20. Verfahren zum Überführen eines Kreiselschwaders (1) mit um etwa vertikale Achsen umlaufend angetriebene in Fahrtrichtung (F) hintereinander gestaffelt angeordnete am Boden durch Laufräder abgestützte Schwadkreisel zum Zusammenrechen von am Boden liegendem Erntegut, dessen Schwadkreisel durch Hochschwenken aus der Arbeitsstellung in eine Transportstellung und umgekehrt verklappbar sind, wobei die Schwadkreisel an Auslegern in Klappgelenken mit einem Fahrgestell verbunden sind, und wobei zumindest zwei benachbarte Schwadkreisel in ihrer Arbeitsstellung eine Staffelreihe bilden und wobei wenigstens zwei Staffelreihen eine V-förmige Anordnung bilden, **dadurch gekennzeichnet, dass** die Schwadkreisel (4,4') der letzten Staffelreihe (12) an längenveränderbaren Auslegern (15,15') derart angelenkt sind, dass die Längserstreckung der Ausleger (15,15') in deren Arbeitsstellung einen entgegen der Fahrtrichtung V-förmig sich öffnenden und divergierenden Verlauf mit einem Öffnungswinkel (β) aufweisen, wobei der letzten Staffelreihe (12) zumindest eine weitere Staffelreihe (10 oder 11) vorgelagert ist, deren Schwadkreisel (2,2' oder 3,3') an um im hinteren Bereich des Fahrgestells (5) um Hochachsen (22,22') verschwenkbaren Längszusatzträgern (17,17') angelenkt sind, wobei die Längszusatzträger (17,17') in deren Arbeitsstellung einen V-förmig sich in Fahrtrichtung öffnenden und divergierenden Verlauf mit einem Öffnungswinkel (α) aufweisen, und wobei die Ausleger (15,15'), (13,13') und/oder 14,14') so ausgestaltet sind, dass die an ihnen angelenkten Schwadkreisel vor oder während des Verklappens in eine Transportstellung eine Verrückung entlang eines Weges innerhalb der Längserstreckung der sie führenden Ausleger erfahren und wobei die Summe der Bewegungen aus den Bewegungsformen Verrückungen und Verklappungen zur Überführung des Kreiselschwaders (1) in dessen Transportstellung einen Beitrag zur Minderung der Transporthöhe und zur Minderung der Transportlänge liefern.

## Claims

1. Rotor swather (1) with swathing rotors, that are driven about vertical axles, arranged in a staggered formation behind one another in the direction of travel (F) and supported on the ground by wheels, for raking up harvest crops lying on the ground, the swathing rotors of which can be folded by pivoting upwards from the working position into a transport position and vice versa, whereby the swathing rotors are connected at arms in folding articulations with a frame, and whereby at least two adjacent swathing rotors form a staggered row in their working position, and whereby at least two staggered rows form a V-shaped arrangement, and whereby at least two further staggered rows (10, 11) are positioned in front of the last staggered row (12), and the swathing rotors (2, 2', 3, 3') of the staggered rows (10, 11) positioned in front are articulated onto longitudinal additional supports (17, 17') that are pivotable in the rear section of the frame (5) about vertical axles (22, 22'), **characterised in that** the swathing rotors (4, 4') of the last staggered row (12) are articulated onto length adjustable arms (15, 15'), and the longitudinal extension of the arms (15, 15') in their working position forms an opening and diverging shape that is V-shaped opposite the direction of travel with an opening angle (β).

2. Rotor swather (1) according to claim 1, **characterised in that** the longitudinal additional supports (17, 17') in their working position form an opening and diverging shape that is V-shaped in the direction of travel (F) with an opening angle (α).

3. Rotor swather (1) according to claim 2, **characterised in that** the opening angle (α) between the longitudinal additional supports (17,17') in the working position is between about 115° and 75°, preferably about 100°.

4. Rotor swather (1) according to claim 2, **characterised in that** the swathing rotor (2, 2', 3, 3') of the foremost rows (10, 11) are articulated by means of outwards pointing arms (13, 13', 14, 14') in folding articulations (18) onto the longitudinal additional supports (17, 17').

5. Rotor swather (1) according to claim 4, **characterised in that** at least one of the arms (13, 13', 14, 14') can be adjusted in length.

6. Rotor swather (1) according to claim 4, **characterised in that** the arms (13, 13', 14, 14') run mainly at right angles to the longitudinal middle plane (25).

7. Rotor swather (1) according to claim 4, **characterised in that** the arms (13, 13', 14, 14') run roughly perpendicular to the longitudinal middle plane.

8. Rotor swather (1) according to claim 4, **characterised in that** the hinge axles (19) of the folding articulations (18) in the transport position of the rotor swather (1) run in travelling direction (F) or parallel to the main longitudinal middle plane (25).

9. Rotor swather (1) according to claim 4, **characterised in that** the adjustability in length at least of the front arms (13, 13') can be used to vary the working breadth (28, 28').

10. Rotor swather (1) according to claim 4, **characterised in that** the adjustability in length of the arms (13, 13', 14, 14') can be used to reduce the transport length (30).

11. Rotor swather (1) according to claim 4, **characterised in that** the adjustability in length of the arms (13, 13', 14, 14') can be used to reduce the transport height (35).

12. Rotor swather (1) according to claim 1, **characterised in that** the opening angle (β) is between about 95° and 65°, preferably about 80°.

13. Rotor swather (1) according to claim 1, **characterised in that** the hinge axles (21) of the folding articulation (20) run in the direction of travel (F) or parallel to the main longitudinal middle plane (25).

14. Rotor swather (1) according to claim 1, **characterised in that** the adjustability in length of the arms (15, 15') can be used to vary the width of the swath (29, 29').

15. Rotor swather (1) according to claim 1, **characterised in that** the adjustability in length of the arms (15, 15') can be used to reduce the transport length (30).

16. Rotor swather (1) according to claim 1, **characterised in that** the adjustability in length of the arms (15, 15') can be used to reduce the transport height (35).

17. Rotor swather (1) according to claim 1 and claim 12 and other preceding claims, **characterised in that** the change in position of the swathing rotors (2, 2', 3, 3', 4, 4') relative to the main longitudinal middle plane (25) can be caused by a displacement of the swathing rotors (2, 2', 3, 3', 4, 4') along the path of the longitudinal extension of the arms (13, 13', 14, 14', 15, 15').

18. Rotor swather (1) according to claim 1 and other preceding claims, **characterised in that** the rotor swather (1) is designed as as swather that can be attached onto a tractor (1).

19. Rotor swather (1) according to claim 1 and other preceding claims, **characterised in that** the rotor swather (1) is designed as an automatically driving swather.

20. Method for transferring a rotor swather (1) with swathing rotors, that are driven about vertical axles, arranged in a staggered formation behind one another in the direction of travel (F) and supported on the ground by wheels, for raking up harvest crops lying on the ground, the swathing rotors of which can be folded by pivoting upwards from the working position into a transport position and vice versa, whereby the swathing rotors are connected at arms in folding articulations with a frame, and whereby at least two adjacent swathing rotors form a staggered row in their working position, and whereby at least two staggered rows form a V-shaped formation, **characterised in that** the swathing rotors (4, 4') of the last staggered row (12) are articulated with length-adjustable arms (15, 15'), such that the longitudinal extension of the arms (15, 15') in their working position has an opening and diverging shape that is V-shaped opposite the direction of travel with an opening angle (β), whereby at least one further staggered row (10 or 11) is arranged in front of the last staggered row (12), the swathing rotors (2, 2', 3, 3') of which are articulated onto longitudinal additional supports (17, 17') that are pivotable in the rear section of the frame (5) about vertical axes (22, 22'), whereby the longitudinal additional supports (17, 17') in their working position have an opening and diverging shape that is V-shaped in the direction of travel with an opening angle (α), and whereby the arms (15, 15'), (13, 13') and/or (14, 14') are designed so that the swathing rotors articulated thereonto before or during folding into a transport position experience a displacement along a path within the longitudinal extension of the arms guiding the latter, and whereby the sum of movements - displacement and folding - for transferring the rotor swather (1) into its transport position contributes to the reduction in the transport height and reduction in the transport length.

## Revendications

1. Andaineur rotatif (1) comportant des rotors d'andaineur afin de ramasser la récolte au sol, lesquels sont supportés au sol par des roues mobiles, agencés de manière échelonnée les uns derrière les autres dans le sens de la marche (F) et entraînés en rotation autour d'axes approximativement verticaux, dont les rotors d'andaineur peuvent être basculés vers le haut hors de la position de travail dans une position de transport et rabattus en sens inverse, les rotors d'andaineur étant reliés à un châssis sur des bras dans des articulations rabattables et au moins deux rotors d'andaineur voisins formant dans leur position de travail une rangée échelonnée et au moins deux rangées échelonnées formant un agencement en V, au moins deux autres rangées échelonnées (10, 11) étant montées en amont de la dernière rangée échelonnée (12) et les rotors d'andaineur (2, 2', 3, 3') des rangées échelonnées situées en amont (10, 11) étant articulés sur des longerons auxiliaires (17, 17') pouvant être pivotés autour d'axes verticaux (22, 22') dans la zone arrière du châssis (5),
**caractérisé en ce que** les rotors d'andaineur (4, 4') de la dernière rangée échelonnée (12) sont articulés sur des bras réglables en longueur (15, 15') et **en ce que** l'étendue longitudinale des bras (15, 15'), dans leur position de travail, présente un profil divergent et s'ouvrant en V selon un angle d'ouverture (β) dans le sens inverse de la marche.

2. Andaineur rotatif (1) selon la revendication 1,
**caractérisé en ce que** les longerons auxiliaires (17, 17') présentent, dans leur position de travail, un profil divergent et s'ouvrant en forme de V selon un angle d'ouverture (α) dans le sens de la marche (F).

3. Andaineur rotatif (1) selon la revendication 2,
**caractérisé en ce que** l'angle d'ouverture (α) entre les longerons auxiliaires (17, 17') est compris, dans la position de travail, entre environ 115° et 75°, et est de préférence égal à environ 100°.

4. Andaineur rotatif (1) selon la revendication 2,
**caractérisé en ce que** les rotors d'andaineur (2, 2', 3, 3') des rangées échelonnées situées en amont (10, 11) sont articulés au moyen de bras (13, 13', 14, 14') dirigés vers l'extérieur dans des articulations rabattables (18) sur les longerons auxiliaires (17, 17').

5. Andaineur rotatif (1) selon la revendication 4,
**caractérisé en ce qu'**au moins l'un des bras (13, 13', 14, 14') est réglable en longueur.

6. Andaineur rotatif (1) selon la revendication 4,
**caractérisé en ce que** les bras (13, 13', 14, 14') s'étendent essentiellement transversalement au plan médian longitudinal (25).

7. Andaineur rotatif (1) selon la revendication 4,
**caractérisé en ce que** les bras (13, 13', 14, 14') s'étendent de manière à peu près perpendiculaire au plan médian longitudinal.

8. Andaineur rotatif (1) selon la revendication 4,
**caractérisé en ce que** les axes articulés (19) des articulations rabattables (18), dans la position de transport de l'andaineur rotatif (1), s'étendent approximativement dans le sens de la marche (F) ou de manière à peu près parallèle au plan médian longitudinal principal (25).

9. Andaineur rotatif (1) selon la revendication 4,
**caractérisé en ce que** la possibilité de réglage de la longueur d'au moins les bras avant (13, 13') peut être utilisée afin de faire varier la largeur de travail (28, 28').

10. Andaineur rotatif (1) selon la revendication 4,
**caractérisé en ce que** la possibilité de réglage de la longueur des bras (13, 13', 14, 14') peut être utilisée afin de réduire la longueur de transport (30).

11. Andaineur rotatif (1) selon la revendication 4,
**caractérisé en ce que** la possibilité de réglage de la longueur des bras (13, 13', 14, 14') peut être utilisée afin de réduire la hauteur de transport (35).

12. Andaineur rotatif (1) selon la revendication 1,
**caractérisé en ce que** l'angle d'ouverture (β) est compris entre environ 95° et 65°, et est de préférence égal à environ 80°.

13. Andaineur rotatif (1) selon la revendication 1,
**caractérisé en ce que** les axes articulés (21) des articulations rabattables (20) s'étendent à peu près dans le sens de la marche (F) ou à peu près parallèlement au plan médian longitudinal principal (25).

14. Andaineur rotatif (1) selon la revendication 1,
**caractérisé en ce que** la possibilité de réglage de la longueur des bras (15, 15') peut être utilisée afin de faire varier la largeur d'andainage (29, 29').

15. Andaineur rotatif (1) selon la revendication 1,
**caractérisé en ce que** la possibilité de réglage de la longueur des bras (15, 15') peut être utilisée afin de réduire la longueur de transport (30).

16. Andaineur rotatif (1) selon la revendication 1,
**caractérisé en ce que** la possibilité de réglage de la longueur des bras (15, 15') peut être utilisée afin de réduire la hauteur de transport (35).

17. Andaineur rotatif (1) selon la revendication 1 et la revendication 12 et d'autres revendications précédentes,
**caractérisé en ce que** le changement de position des rotors d'andaineur (2, 2', 3, 3', 4, 4') par rapport au plan médian longitudinal principal (25) peut être introduit par un déplacement des rotors d'andaineur (2, 2', 3, 3', 4, 4') le long de l'étendue longitudinale des bras (13, 13', 14, 14', 15, 15').

18. Andaineur rotatif (1) selon la revendication 1 et d'autres revendications précédentes,
**caractérisé en ce que** l'andaineur rotatif (1) est réalisé en tant qu'andaineur pouvant être accroché à un tracteur (1).

19. Andaineur rotatif (1) selon la revendication 1 et d'autres revendications précédentes,
**caractérisé en ce que** l'andaineur rotatif (1) est réalisé en tant qu'andaineur autoporteur.

20. Procédé destiné à transporter un andaineur rotatif (1) comportant des rotors d'andaineur afin de ramasser la récolte au sol, lesquels sont supportés au sol par des roues mobiles, agencés de manière échelonnée les uns derrière les autres dans le sens de la marche (F) et entraînés en rotation autour d'axes approximativement verticaux, dont les rotors d'andaineur peuvent être basculés vers le haut hors de la position de travail dans une position de transport et rabattus en sens inverse, les rotors d'andaineur étant reliés à un châssis sur des bras dans des articulations rabattables et au moins deux rotors d'andaineur voisins formant dans leur position de travail une rangée échelonnée et au moins deux rangées échelonnées formant un agencement en V,
**caractérisé en ce que** les rotors d'andaineur (4, 4') de la dernière rangée échelonnée (12) sont articulés sur des bras réglables en longueur (15, 15') de telle façon que l'étendue longitudinale des bras (15, 15'), dans leur position de travail, présente un profil divergent et s'ouvrant en forme de V selon un angle d'ouverture (β) dans le sens inverse de la marche, au moins une autre rangée échelonnée (10 ou 11) étant montée en amont de la dernière rangée échelonnée (12), ses rotors d'andaineur (2, 2' ou 3, 3') étant articulés sur des longerons auxiliaires (17, 17') pouvant être pivotés autour d'axes verticaux (22, 22') dans la zone arrière du châssis (5), les longerons auxiliaires (17, 17') présentant dans leur position de travail un profil divergent et s'ouvrant en forme de V selon un angle d'ouverture (α) dans le sens de la marche, et les bras (15, 15'), (13, 13') et/ou (14, 14') étant agencés de telle manière que les rotors d'andaineur articulés sur ceux-ci subissent, avant ou pendant le basculement dans une position de transport, un déplacement le long d'une course à l'intérieur de l'étendue longitudinale des bras qui les guident et la somme des mouvements résultant des formes de mouvement déplacements et basculements destinées à amener l'andaineur rotatif (1) dans sa position de transport contribuant à réduire la hauteur de transport et à réduire la longueur de transport.
